# EUROPÄISCHE PATENTANMELDUNG

(11) **EP 4 155 605 A1**
(43) Veröffentlichungstag der Anmeldung: **29.03.2023**
(21) Anmeldenummer: 22197420.7
(22) Anmeldetag: 23.09.2022
(51) Int. Cl.: F21V 5/04, F21V 5/08, F21V 7/00, F21V 17/00, F21V 5/00

(54) **STRAHLER**

(30) Priorität: 24.09.2021 DE 102021124722
(71) Anmelder: Bartenbach Holding GmbH, 6071 Aldrans (AT)
(72) Erfinder: FÖGER, Daniel, 6424 Sitz (AT); REISECKER, Christian, 6166 Fulpmes (AT); SEGL, Maximilian, 6130 Schwaz (AT); SPIELBERGER, Georg, 6020 Innsbruck (AT)
(74) Vertreter: Thoma, Michael

(57) **Zusammenfassung**

Die vorliegende Erfindung betrifft einen Strahler (1) mit zumindest einer Lichtquelle (2) sowie einer nicht-abbildenden Linse (3) zum vollständigen Formen eines Strahlenbündels (4) zum Ausleuchten eines Zielgebiets (5), wobei die Linse (3) auf gegenüberliegenden Stirnseiten eine vorzugsweise napfförmige Lichteintrittsfläche (7) und eine Lichtaustrittsfläche (8), sowie umfangsseitig verteilt mehrere Schalensegmente (10) aufweist, die als totalreflektierende Freiformsegmente ausgebildet sind, wobei jedes der Schalensegmente (10) dazu ausgebildet ist, im Zielgebiet (5) einen Flächenanteil von mindestens 2/n zu bestrahlen, wenn n die Anzahl der Schalensegmente (10) der Linse (3) ist.

## Beschreibung

Die vorliegende Erfindung betrifft einen Strahler mit zumindest einer Lichtquelle sowie einer nicht-abbildenden Linse zum vollständigen Formen eines Strahlenbündels zum Beleuchten eines Zielgebiets, wobei die Linse auf gegenüberliegenden Stirnseiten eine vorzugsweise napfförmige Lichteintrittsfläche und eine Lichtaustrittsfläche aufweist und umfangsseitig verteilt mehrere Schalensegmente besitzt, die als totalreflektierende Freiformsegmente ausgebildet sind.

In verschiedenen Beleuchtungsanwendungen unterliegen Strahler strikten Randbedingungen hinsichtlich der Baugröße und der Einbauumgebung, so dass es schwierig ist, das jeweilige Zielgebiet tatsächlich homogen auszuleuchten bzw. die gewünschte Lichtverteilung im Zielgebiet exakt zu erreichen. Bei beengten Einbauverhältnissen ist es oft nicht möglich, mehrere optische Elemente hintereinander zu verbauen, so dass oft mit nur einer Linse das Strahlenbündel vollständig so geformt werden muss, dass im Zielgebiet die gewünschte Lichtverteilung vorliegt. Erschwerend kann dabei hinzukommen, dass das Zielgebiet eine lichttechnisch anspruchsvolle Konturierung besitzt, beispielsweise rechteckig oder dreieckig, was oft dazu führt, dass in den Randbereichen bzw. in den Ecken Inhomogenitäten bzw. Ausleuchtungsdefizite auftreten. Diese Problematik verschärft sich nochmals dann, wenn der Strahler, insbesondere dessen Linse eine Außenkontur haben muss, die vom zu beleuchtenden Zielgebiet abweicht, beispielsweise in ein rundes Montageloch passgenau einsetzbar sein soll, obwohl ein rechteckiges Zielgebiet auszuleuchten ist.

Solche Restriktionen hinsichtlich der Einbauumgebung kommen in diversen Anwendungen vor. Beispiele hierfür sind in Decken- oder Wandpaneele verbaute Strahleranordnungen, deren Strahler in Paneelaussparungen eingepasst werden müssen. Um gleiche Aussparungen vorsehen zu können, sollen möglichst alle Strahler dieselben Anschlussmaße und -konturen aufweisen. Da die Umfangskonturen wesentlich von der abstrahlenden Linse beeinflusst werden, unterliegen die Linsen der Strahler entsprechenden Restriktionen.

Hierbei erhöht sich der Schwierigkeitsgrad, wenn verschiedene Strahler zwar dieselben Anschlusskonturen und -maße haben sollen, allerdings verschiedene Lichtverteilungen generieren sollen. Beispielsweise gibt es bei Shopbeleuchtungen Vitrinen mit vorgegebenen Aussparungen für die Strahler, die aber je nach Beleuchtungsaufgabe rechteckige oder runde Zielgebiete wie beispielsweise rechteckige Silberplatten oder runde Teller gleichermaßen homogen ausleuchten sollen. Auch bei Gebäudebeleuchtungen wie beispielsweise Gang- oder Küchenbeleuchtungen wird bisweilen verlangt, in gleiche Einbauaussparungen bzw. Leuchten- oder Strahlergehäuse verschiedene Strahler montieren zu können, um beispielsweise im normalen Abendbetrieb einen länglichen Gang durch schmale, runde Warmlichtkegel atmosphärisch zu akzentuieren, während für einen Notfall eine möglichst vollständige, breit strahlende Weißlichtausleuchtung gewünscht sein kann.

Der vorliegenden Erfindung liegt die Aufgabe zugrunde, einen verbesserten Strahler der genannten Art zu schaffen, der Nachteile des Stands der Technik vermeidet und letzteren in vorteilhafter Weise weiterbildet. Insbesondere soll ein kompakt bauender Strahler geschaffen werden, der auch bei vorgegebenen Einbaukonturen und -maßen verschieden konturierte Zielgebiete homogen ausleuchten kann bzw. in Zielgebieten, die konturmäßig von der Einbauumgebung abweichen, eine gewünschte Lichtverteilung bewirken kann.

Erfindungsgemäß wird die genannte Aufgabe durch einen Strahler gemäß Anspruch 1 gelöst. Bevorzugte Ausgestaltungen der Erfindung sind Gegenstand der abhängigen Ansprüche.

Es wird also vorgeschlagen, dass die mehreren, lichtumlenkenden Schalensegmente der Linse jeweils im Zielgebiet einen größeren Flächenanteil bestrahlen, als dem jeweiligen Schalensegment an sich zukommt. Sind beispielsweise vier Schalensegmente vorgesehen, kann jedes Schalensegment mehr als ein Viertel der Fläche des Zielgebiets bestrahlen. Sind drei Schalensegmente vorgesehen, kann jedes Schalensegment mehr als ein Drittel der Fläche des Zielgebiets bestrahlen.

Um mit einer begrenzten Zahl von Schalensegmenten eine vergleichmäßigte Ausleuchtung des Zielgebiets zu erreichen, kann jedes Schalensegment einen mehr als doppelt so großen Flächenanteil bestrahlen, als dem jeweiligen Schalensegment an sich zukommt.

Insbesondere können die umfangsseitigen, zumindest teilweise totalreflektierenden Schalensegmente derart konturiert bzw. konfiguriert sein, dass das von einem jeweiligen Schalensegment abgegebene Strahlenbündel im Zielgebiet einen Flächenanteil von zumindest 2/n bestrahlt, wobei n die Anzahl der Schalensegmente der Linse ist. Mit anderen Worten bestrahlt jedes Strahlensegment zumindest einen doppelt so großen Anteil an der von den Segmenten insgesamt bestrahlten, sozusagen aufsummierten Fläche als dem Schalensegment aufgrund seines Anteils an der Schalensegmenteanzahl an sich zukommt.

Dabei wird die Segmentierung der Schalensegmente dazu genutzt, das Zielgebiet mehrfach bzw. überdeckend auszuleuchten, indem jedes Schalensegment einen Flächenanteil des vom Indirektstrahlenbündel insgesamt beleuchteten Flächenstücks beleuchtet, mindestens doppelt so groß ist wie der Anteil des jeweiligen Schalensegments an der lichttechnisch aktiven Fläche des Indirektlicht-Linsenkorpus. Im Zusammenspiel mit der nicht-abbildenden Ausbildung bzw. Arbeitsweise der Optik bzw. der Linse kann hierdurch eine besonders gleichmäßige, homogene Ausleuchtung des Zielgebiets erzielt werden. Segmentierte Linsen sind zwar per se bekannt, bspw. in Automobil-Scheinwerfern, werden jedoch regelmäßig abbildend ausgebildet, um das Zielgebiet segmentiert auszuleuchten und segmentweise abblenden zu können, vgl. bspw. DE 20 2011 078 653 B1 oder DE 10 2016 118 152 B1. Die Linse erzeugt dabei im Zielgebiet ein Bild bzw. Abbild der Lichtquelle, so dass bei entsprechender Ausbildung der Lichtquelle, bspw. in Form eines LED-Clusters, durch Ausschalten einzelner Lichtquellen-Punkte bzw. -bereiche entsprechende Bildbereiche im Zielgebiet abgeblendet werden können. Im Gegensatz zu solchen abbildenden Systemen arbeitet die Linse vorliegend nicht-abbildend, um eine gleichmäßige, homogene Ausleuchtung des Zielgebiets zu erzielen, was durch die erhöhten Flächenanteile der Segmente und die damit einhergehende, überdeckende, mehrfache Ausleuchtung des Zielgebiets durch das Indirektlichtbündel in nochmals gesteigertem Maße erreicht wird.

Der von einem Schalensegment bestrahlte Flächenanteil kann auch 3/n oder mehr betragen. In Weiterbildung der Erfindung kann unabhängig von der Zahl der Schalensegmente vorgesehen sein, dass jedes umfangsseitige Linsenschalensegment mehr als 50% oder auch mehr als 75% des Zielgebiets des Indirektlichtbündels ausleuchtet.

Durch die reflektierenden Schalensegmente der Linse einerseits und die stirnseitigen Lichteintritts- und -austrittsflächen, die im Zusammenspiel miteinander auch an den genannten Schalensegmenten vorbei ein Lichtbündel formen, generiert die Linse sozusagen zweierlei Licht und wird hinsichtlich der erzielbaren Lichtverteilung deutlich variabler. Einerseits formt die Linse über ihre stirnseitigen Lichteintritts- und - austrittsflächen am zentralen Linsenkorpus ein direkt abgestrahltes Direktlichtbündel mit einer gewünschten Lichtverteilung im Zielgebiet, sowie andererseits ein Indirektlichtbündel, das sozusagen zweifach bzw. mehrfach geformt wurde, nämlich einerseits vom zentralen Linsenkorpus und andererseits von den ergänzenden, umfangsseitigen Linsensegmenten, die das Licht mit der gewünschten Lichtverteilung in das Zielgebiet strahlen.

Das genannte Direktlichtbündel meint dabei das von der Linse abgestrahlte Strahlenbündel, das im Strahlengang von der Lichtquelle her betrachtet zunächst an der-Lichteintrittsfläche der Linse eingefangen und von der Lichteintrittsfläche durch den Linsenkorpus hindurch direkt, das heißt ohne Reflexion an den reflektierenden Schalensegmenten, auf die Lichtaustrittsfläche gelenkt wird, um von der Lichtaustrittsfläche dann abgestrahlt zu werden. Das Indirektlichtbündel tritt natürlich auch über die Lichtaustrittsfläche der Linse aus, wird jedoch von den Strahlen gebildet, die zuvor im Linsenkorpus auf die reflektierenden, umfangsseitigen Schalensegmente getroffen und dort per Totalreflexion und/oder Reflexion umgelenkt worden sind.

Die umfangsseitig vorgesehenen Schalensegmente der Linse sind vorzugsweise zumindest teilweise totalreflektierend ausgebildet, um zumindest einen Teil des von der napfförmigen Lichteintrittsfläche her auf die Schalensegmente fallenden Lichts per Totalreflexion umzulenken. Zusätzlich können die Schalensegmente aber auch zumindest teilweise reflektierend beschichtet sein, um in schwierigen Abschnitten der Schalensegmente, in denen Totalreflexion nur schwierig erzielbar wäre, eine Umlenkung der auftreffenden Lichtstrahlen per Reflexion sicherzustellen und insgesamt für die als Freiformsegmente ausgebildeten Schalensegmente eine größere Gestaltungsfreiheit hinsichtlich der Konturierung zu erreichen. Hierdurch kann das von den Schalensegmenten erzeugte Indirektlichtbündel in der gewünschten Weise geformt werden und noch besser an die Erfordernisse im Zielgebiet und die Einbausituation des Strahlers angepasst werden.

Durch das Zusammenspiel der Direkt- und Indirektlichtbündel kann eine hohe Flexibilität hinsichtlich der Lichtverteilung im Zielgebiet erreicht werden. Gleichzeitig kann eine kurze axiale Baulänge der Linse erzielt werden, die einen Einbau in beengte Montageumgebungen begünstigt.

Insbesondere kann durch eine Überlagerung des Direktstrahlenbündels und des Indirektstrahlenbündels im Zielgebiet eine gewünschte Lichtverteilung leichter erreicht werden, da das eine Strahlenbündel Defizite des anderen Strahlenbündels hinsichtlich der gewünschten Lichtverteilung ausgleichen kann. Nach einer vorteilhaften Weiterbildung der Erfindung können die Lichteintritts- und -austrittsflächen einerseits und die umfangsseitig Schalensegmente andererseits derart konfiguriert sein, dass das Direktstrahlenbündel aus dem zentralen Linsenkorpus einerseits und das Indirektstrahlenbündel aus den Schalensegmenten andererseits im Zielgebiet unterschiedliche, voneinander abweichende Beleuchtungsstärkeverteilungen aufweisen.

Beispielsweise kann das Direktstrahlenbündel einen zentralen Bereich des Zielgebiets im Wesentlichen gleichmäßig ausleuchten, während das Indirektstrahlenbündel Randbereiche des Zielgebiets stärker aufhellt oder eine dort eventuell abfallende Beleuchtungsstärke des Direktstrahlenbündels kompensiert oder überhöht, so dass eine randseitige Aufhellung erzielt wird. Denkbar ist aber auch eine umgekehrte Konfigurierung, bei der das Indirektstrahlenbündel einen Zentralbereich gleichmäßig ausleuchtet und das Direktstrahlenbündel eine randseitige Aufhellung des Zielgebiets bewirkt.

Grundsätzlich kommt es in Betracht, dass das Indirektlichtbündel aus den umfangsseitigen Schalensegmenten und das Direktlichtbündel aus dem zentralen Linsenkorpus separate und/oder einander nicht überlappende Zielgebiete bestrahlen, beispielsweise dergestalt, dass die bestrahlten Zielgebiete nahtlos aneinander angrenzen.

Insbesondere aber können die Direkt- und Indirektlichtbündel dasselbe Zielgebiet und/oder überlappende Zielgebiete bestrahlen, um im Zielgebiet eine überlagerte Lichtverteilung zu erzielen und sich die Beleuchtungsstärken im Zielgebiet aufsummieren bzw. ergänzen.

Das Direktlichtbündel aus dem zentralen Linsenkorpus kann vorteilhafterweise ebenfalls mehr als 50% oder auch mehr als 75% des gemeinsamen Zielgebiets ausleuchten.

Insbesondere kann in Weiterbildung der Erfindung vorgesehen sein, dass das Zielgebiet des Direktstrahlenbündels zumindest näherungsweise kongruent zum Zielgebiet des Indirektstrahlenbündels ist.

Vorteilhafterweise kann durch das Zusammenspiel der vorzugsweise napfförmigen Lichteintrittsfläche und der gegenüberliegenden Lichtaustrittsfläche der Linse auch das Direktlichtstrahlenbündel manipuliert werden und im Vergleich zu dem an der Lichteintrittsfläche der Linse von der Lichtquelle her empfangenen Strahlenbündel hinsichtlich des Aufweitwinkels und/oder der Lichtverteilung verändert werden, so dass das von der Lichtaustrittsfläche austretende Direktlichtstrahlenbündel von dem an der Lichteintrittsfläche empfangenen Strahlenbündel abweicht. Das genannte Direktlichtstrahlenbündel wird dabei nur von der Lichteintrittsfläche und der Lichtaustrittsfläche umgelenkt bzw. manipuliert, nicht jedoch von den umfangsseitigen Schalensegmenten, da das Direktlichtstrahlenbündel von der Lichteintrittsfläche direkt auf die Lichtaustrittsfläche gelenkt wird.

Das genannte Direktlichtstrahlenbündel ist dabei vorteilhafterweise nicht diffus, sondern ein gerichtetes Strahlenbündel, wobei das Strahlenbündel in verschiedener Weise geformt werden kann, beispielsweise aufgeweitet oder verjüngt und/oder hinsichtlich der Beleuchtungsstärkeverteilung manipuliert werden kann.

Beispielsweise können die Lichteintritts- und Lichtaustrittsflächen dazu ausgebildet sein, ein Direktlichtstrahlenbündel mit im Zielgebiet asymmetrischer Beleuchtungsstärkeverteilung zu erzeugen.

Durch das Konzept, umfangsseitig an der Linse zumindest teilweise totalreflektierende Linsenschalensegmente verteilt anzuordnen, die das sich im Linsenkorpus zur Umfangsseite hin ausbreitende Licht einfangen bzw. umlenken, können unabhängig von der Querschnittsform des abgestrahlten Strahlenbündels verschiedene Strahler- bzw. Linsenumrißkonturen realisiert werden bzw. umgekehrt mit einer bestimmten, bspw. durch die Montageumgebung vorgegebenen Linsenumrißkontur verschiedene Strahlenbündelquerschnitte erzielt werden.

Dementsprechend kann ein Leuchtensatz mit mehreren Strahlern bereitgestellt werden, die trotz gleicher Umfangskonturen und/oder gleicher Anschlussmaße der Linsenumrisse aller Strahler verschiedene Abstrahlcharakteristiken verwirklichen. Der Zusammenhang zwischen dem Querschnitt des von der Linse abgegebenen Strahlenbündels und der Außenkontur der Linse wird sozusagen aufgehoben. Beispielsweise kann der Leuchtensatz einen ersten Strahler aufweisen, dessen Linse dazu ausgebildet ist, im Zielgebiet ein im Querschnitt rundes Strahlenbündel abzugeben, und Schalensegmente besitzt, von denen jedes dazu ausgebildet ist, im Querschnitt des Strahlenbündels zumindest einen Flächenanteil von zumindest 2/n zu bestrahlen, wobei n die Anzahl der Schalensegmente ist, sowie zumindest einen zweiten Strahler, dessen Linse dazu ausgebildet ist, im Zielgebiet ein im Querschnitt mehreckiges Strahlenbündel abzugeben, und ebenfalls Schalensegmente besitzt, von denen jedes dazu ausgebildet ist, im Querschnitt des Strahlenbündels zumindest einen Flächenanteil von zumindest 2/n zu bestrahlen, wobei n auch hier die Anzahl der Schalensegmente ist.

Trotz Segmentierung der lichttechnisch effektiven Linsen-, insbesondere totalreflektierenden, umfangsseitigen Linsenflächen in mehrere Schalensegmente kann also insbesondere auch ein rundes bzw. kreisrundes Strahlenbündel erzeugt werden, während die genannte Segmentierung gleichermaßen für die Erzeugung von eckigen Strahlenbündeln genutzt werden kann. Dabei wird die Segmentierung dazu genutzt, das Strahlenbündel mehrfach bzw. überdeckend auszuleuchten, indem jedes Schalensegment einen Flächenanteil des vom Strahlenbündel insgesamt beleuchteten Flächenstücks beleuchtet, der mindestens doppelt so groß ist wie der Flächenanteil des jeweiligen Schalensegments an der gesamten lichttechnisch aktiven Fläche der Linse bzw. der Summe aller Schalensegmente. Hierdurch kann eine gleichmäßige, homogene Ausleuchtung erzielt werden.

Der genannte erste Strahler, der ein rundes Strahlenbündel erzeugt, kann hierbei grundsätzlich verschieden ausgebildet sein, wobei das genannte runde Strahlenbündel im Querschnitt kreisrund oder elliptisch oder oval oder in ähnlicher Weise rund sein kann.

In Weiterbildung der Erfindung können auch verschiedene Strahler mit verschieden geformten, insgesamt betrachtet runden Strahlenbündeln vorgesehen sein. Ist beispielsweise der erste Strahler bzw. dessen Linse dazu ausgebildet, im Zielgebiet ein kreisrundes Strahlenbündel zu erzeugen, kann ein dritter Strahler vorgesehen sein, dessen Linse dazu ausgebildet ist, im Zielgebiet ein elliptisches oder ovales Strahlenbündel zu erzeugen. Dabei können die Schalensegmente vorteilhafterweise jeweils als zumindest teilweise totalreflektierender Freiformflächenkorpus ausgebildet sein, die in der vorgenannten Weise jeweils einen Flächenanteil von zumindest 2/n des kreisrunden, beleuchteten Flächenstücks bzw. 2/n des elliptischen oder ovalen beleuchteten Flächenstücks ausleuchten können.

Der vorgenannte zweite Strahler, der ein eckiges Strahlenbündel erzeugt, kann ebenfalls verschieden ausgebildet sein, wobei dessen Linse insbesondere dazu konfiguriert sein kann, ein im Querschnitt polygonales Strahlenbündel, insbesondere ein rechteckiges oder sechseckiges Strahlenbündel zu erzeugen. Grundsätzlich wäre es aber auch möglich, ein dreieckiges, fünfeckiges oder in anderer Weise mehreckiges Polygon als Strahlenbündel vorzusehen.

Die Schalensegmente können dabei an ihren einfassende Umrißkrägen unterschiedlich konturiert sein. Insbesondere kann auch die Linse, die einen runden Strahlenkegel bzw. ein rundes Strahlenbündel erzeugt, eine näherungsweise eckige, insbesondere polygonale Kontur wie beispielsweise in Form eines zumindest angenäherten Quadrats oder eines Rechtecks oder eines Sechsecks aufweisen. Umgekehrt kann die Linse des Strahlers, die in der vorgenannten Weise ein eckiges Strahlenbündel abgibt, eine runde Konturierung aufweisen, beispielsweise eine kreisrunde oder elliptische bzw. ovale Umfangskontur aufweisen. Um die Austauschbarkeit der Strahler bzw. Linsen gegeneinander und damit die Montierbarkeit in dieselbe Einbauumgebung zu erzielen, kann jedoch für die Linsen der Strahler eines zusammengehörigen Leuchtensatzes dieselbe Umfangskontur gewählt.

Die Erfindung wird nachfolgend anhand eines bevorzugten Ausführungsbeispiels und zugehörigen Zeichnungen näher erläutert. In den Zeichnungen zeigen:

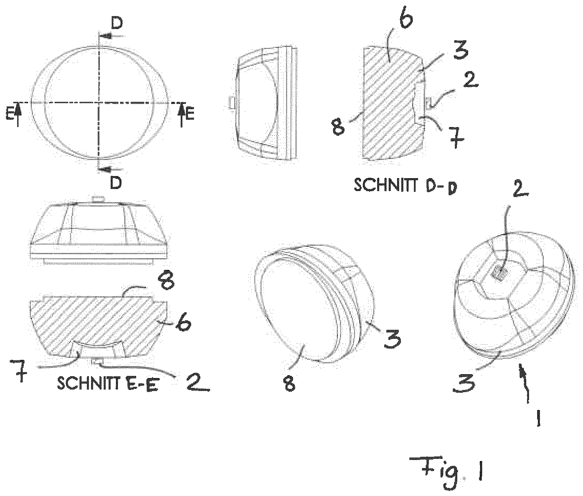

- Fig. 1:: die Linse und die Lichtquelle eines Strahlers in verschiedenen Ansichten nach einer vorteilhaften Ausbildung der Erfindung, die die umfangsseitig verteilt angeordneten Linsenschalensegmente und den gesamten Linsenkorpus auch in Schnittansichten zeigt,
- Fig. 2:: eine Darstellung der Linse aus Fig. 1 in verschiedenen Ansichten aus verschiedenen Blickrichtungen, die die Konturierung der umfangsseitig verteilt angeordneten Schalensegmente zeigt,
- Fig. 3:: eine Darstellung der Anordnung mehrerer Linsen in einem Gehäuse des Strahlers in verschiedenen Ansichten aus verschiedenen Blickrichtungen einschließlich einer Schnittansicht und einer Explosionsdarstellung,
- Fig. 4:: zwei um 90° zueinander verdrehte Schnittansichten einer Linse des Strahlers aus den vorhergehenden Figuren, die die verschiedenen Strahlungswinkel des abgegebenen Strahlungskegels verdeutlicht,
- Fig. 5:: Längsschnitte in zueinander um 90° verdrehten Ebenen durch die Linse ähnlich Fig. 4, wobei in den Schnittansichten die Strahlengänge für das Direktstrahlenbündel und die Strahlengänge für das Indirektstrahlenbündel einmal für den breiten Strahlungswinkel und einmal für den engen Strahlungswinkel eingetragen sind, und,

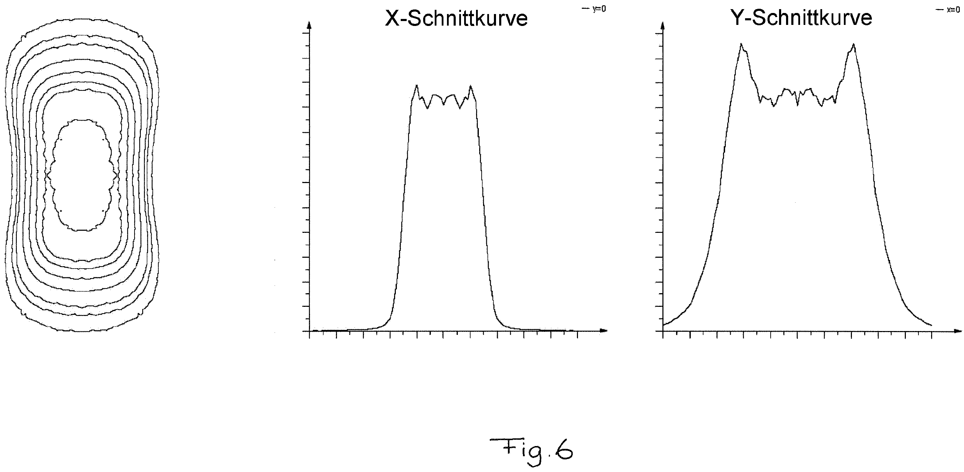

- Fig. 6:: die Lichtverteilung im Zielgebiet der Linse, die eine Randüberhöhung der Lichtstärke im Zielgebiet durch die Schalensegmente und die Lichtverteilung in zwei zueinander um 90° verdrehten Ebenen zeigt.

Wie die Figuren zeigen, umfasst der Strahler 1 eine Lichtquelle 2 beispielsweise in Form einer LED oder eines LED-Clusters, deren Licht von einer Linse 3 eingefangen und zu einem Strahlenbündel 4 zum Ausleuchten eines Zielgebiets 5 geformt wird. Die Linse 3 kann dabei dazu ausgebildet sein, das gesamte Licht der Lichtquelle 2 einzufangen.

Die Linse 3 kann dabei einen Linsenkorpus 6 aufweisen, der an gegenüberliegenden Stirnseiten einerseits eine Lichteintrittsfläche 7 und eine Lichtaustrittsfläche 8 aufweist. Die Lichteintrittsfläche 7 kann beispielsweise napfförmig oder senkenförmig konturiert sein und über der Lichtquelle 2 sitzen, so dass die Lichtquelle 2, die beispielsweise ein Halbraumstrahler sein kann, ihr Licht vollständig in die Lichteintrittsfläche 7 den zentralen Linsenkorpus 6 einstrahlt.

Je nach gewünschter Lichtverteilung und gewünschtem Zielgebiet kann die Linse 3 insgesamt und die Lichtaustritts- und -eintrittsflächen 8, 7 im Speziellen verschieden konturiert sein, beispielweise insgesamt leicht konvexe und/oder konkave oder doppel- bzw. mehrmulden- und/oder -hügelförmige Freiformflächen bilden, beispielsweise um ein im Querschnitt zumindest näherungsweise rechteckiges Direktstrahlenbündel 4d zu erzeugen und/oder ein rechteckiges Zielgebiet 5 näherungsweise vollständig auszuleuchten. Solche gewölbten Linsenflächen können auch mit ebenen Linsenflächen kombiniert sein, wobei beispielsweise zumindest ein Teil bzw. Abschnitt der Lichtaustrittsfläche 8 eben ausgebildet sein kann.

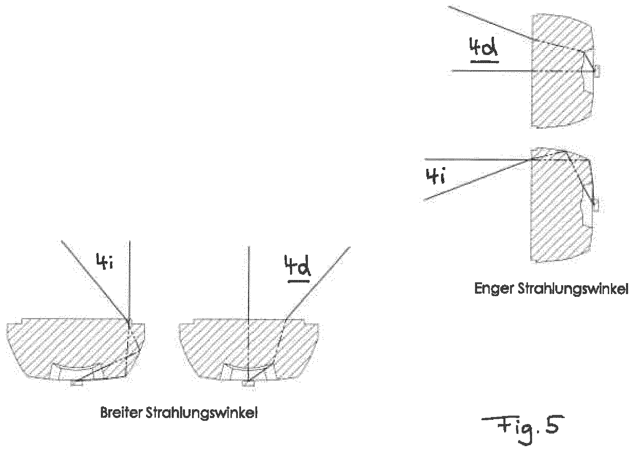

Das genannte Direktstrahlenbündel 4d, vgl. auch Figur 5, kann dabei genauer gesagt von dem zentralen bzw. stirnseitig orientierten Teil der Lichteintrittsfläche 7 und der gegenüberliegenden, ebenfalls stirnseitigen Lichtaustrittsfläche 8 im Zusammenspiel miteinander geformt werden, wobei sich das Direktstrahlenbündel 4d dadurch auszeichnet, dass es von Strahlen erzeugt bzw. gebildet wird, die von dem genannten zentralen Teil der Lichteintrittsfläche 7 direkt, das heißt ohne Umlenkung an den Umfangsflächen der Linse, auf die Lichtaustrittsfläche 8 gelenkt werden und von dort austreten, vgl. Figur 5.

Insbesondere können die stirnseitigen Lichteintritts- und -austrittsflächen 7, 8 dazu ausgebildet sein, im Zusammenspiel miteinander das Direktlichtstrahlenbündel 4d zu manipulieren, so dass es im Vergleich zu dem an der Lichteintrittsfläche 7 von der Lichtquelle 2 empfangenen Strahlenbündel hinsichtlich des Aufweitwinkels und/oder der Lichtverteilung manipuliert ist und von dem an der Lichteintrittsfläche 7 empfangenen Strahlenbündel abweicht.

Umfangsseitig verteilt um den Linsenkorpus 6 herum weist die Linse 3 mehrere Schalensegmente 10 auf, die den Linsenkorpus 6 umfangsseitig umgeben bzw. umschließen. Die Schalensegmente 10 formen dabei aus dem von der Lichteintrittsfläche 7, insbesondere vom äußeren Ringabschnitt der insgesamt napfförmigen Lichteintrittsfläche 7, eingefangenen und zur Umfangsseite der Linse 3 hin gelenkten Licht ein Indirektstrahlenbündel 4i, das ebenfalls über die Lichtaustrittsfläche 8, insbesondere deren äußeren Rand- bzw. Ringabschnitt, austreten und auf das Zielgebiet 5 gerichtet sein kann, so dass im Zielgebiet 5 eine Überlagerung des Direktstrahlenbündels 4d und des Indirektstrahlenbündels 4i erfolgt.

Wie die Figuren zeigen, können die Schalensegmente 10 als Freiformflächen ausgebildet sein. Unabhängig hiervon können die Schalensegmente 10 eine stirnseitige Randkontur 13 umfassen, die mehrachsig gekrümmt ausgebildet sein kann. Einerseits kann die genannte Randkontur 13der Schalensegment 10 eine Krümmung um die zentrale Lichtabstrahlachse 14 herum aufweisen.

Dabei können die Schalensegmente 10 zumindest teilweise totalreflektierend ausgebildet sein und zu dem jeweiligen Schalensegment 10 gelangendes Licht außenumfangsseitig durch Totalreflexion ablenken, so dass das totalreflektierte Licht zur Lichtaustrittsfläche 8 geworfen wird und dort austreten kann, und das Indirektstrahlenbündel 4i bzw. einen Teil hiervon bildet. Die genannten Schalensegmente 10 können an der Außenseite aber auch reflektierend beschichtet sein, um in schwierigen Abschnitten der Segmente, in denen Totalreflexion schwierig wäre, eine Umlenkung der Lichtstrahlen durch Reflexion sicherzustellen. Vorteilhafterweise werfen die Schalensegmente insgesamt das vom äußeren Rand der napfförmigen Lichteintrittsfläche herkommende Licht durch Reflexion und/oder Totalreflexion auf die Lichtaustrittsfläche 8, von der das Licht dann als Indirektstrahlenbündel 4i austritt.

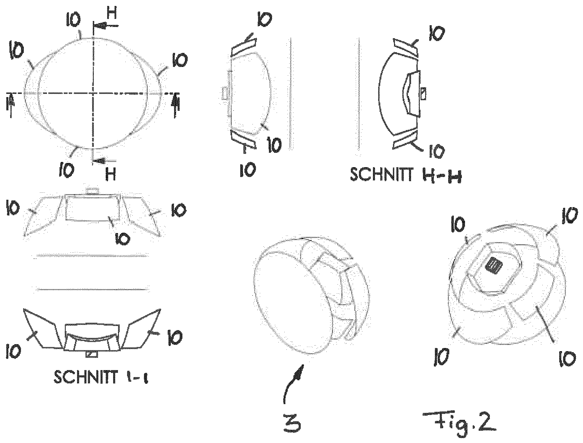

Wie Fig. 2 zeigt, können beispielsweise vier Schalensegmente 10 vorgesehen sein, wobei aber auch drei oder fünf oder sechs oder mehr als sechs Schalensegmente um den Linsenkorpus 6 herum verteilt angeordnet sein können.

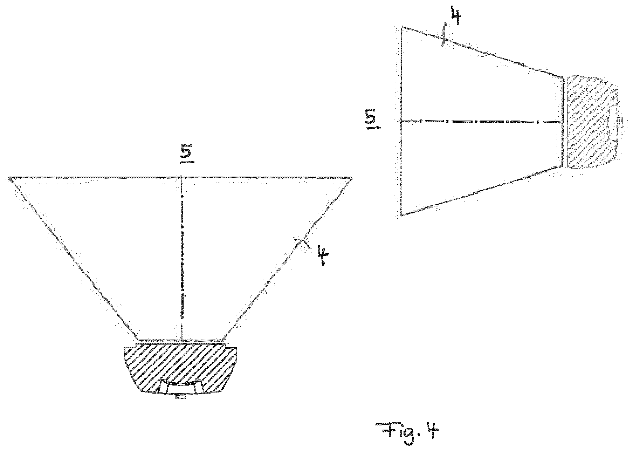

Wie die Figuren 4 und 5 verdeutlichen, können die Direkt- und Indirektstrahlenbündel 4d und 4i im Zielgebiet 5 überlagert werden und das Zielgebiet 5 gemeinsam ausleuchten, wobei die Zielgebiete der Direkt- und Indirektstrahlenbündel zueinander kongruent sein können. Alternativ können die Zielgebiete einander aber auch nur teilweise überlappen oder ggf. auch ohne Überlappung, beispielsweise nahtlos angrenzend sein.

Vorteilhafterweise bestrahlt dabei jedes Schalensegment 10 einen Flächenanteil des Zielgebiets 5, der größer ist als der Anteil des Schalensegments an der lichttechnisch aktiven Totalreflexionsfläche der Linse 3. Insbesondere kann jedes Schalensegment 10 einen Flächenanteil im Zielgebiet 5 bestrahlen, der mindestens doppelt so groß ist wie der zahlenmäßige Anteil des jeweiligen Schalensegments an der Gesamtzahl der Schalensegmente 10. Ist n die Anzahl der Schalensegmente 10, kann jedes Schalensegment 10 einen Flächenanteil von 2/n oder mehr im Zielgebiet 5 bestrahlen. Durch die überlappende Bestrahlung des Zielgebiets 5 durch jedes Schalensegment 10 kann einer Vergleichmäßigung der Ausleuchtung erzielt werden.

Wie die Figuren 4 und 5 verdeutlichen, können die Linsen 3 Strahlenbündel mit verschieden breiten bzw. breiten und engen Strahlungswinkeln abstrahlen, wobei es bei einer asymmetrischen Lichtverteilung auch möglich ist, dass die abgestrahlten Lichtbündel in verschiedenen Schnittebenen verschiedene Strahlungswinkel besitzen. Beispielsweise kann die Linse 3 in einer die Hauptabstrahlrichtung enthaltenden Schnittebene breit abstrahlen und in einer dazu um 90° verdrehten Schnittebene eng abstrahlen, vgl. Fig. 4.

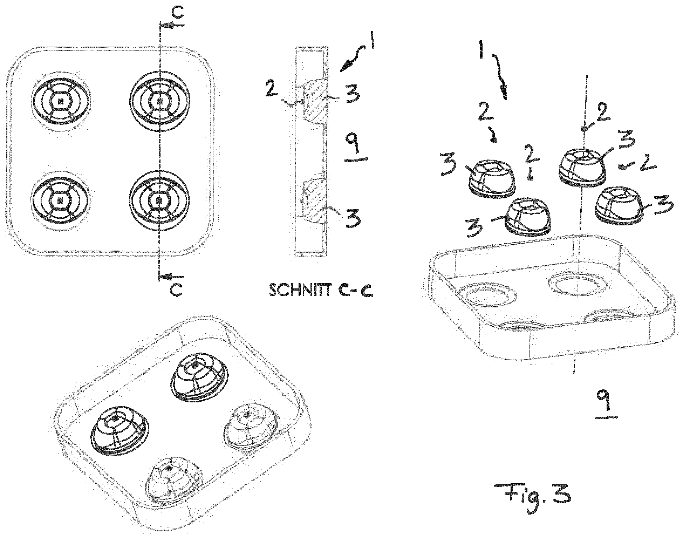

Andererseits ist es aber auch möglich, verschiedene Linsen 3 zu schaffen, die zwar gleiche Anschlussmaße und -konturen besitzen, so dass sie in ein gemeinsames Gehäuse mit gleichen Anschlussmaßen bzw. Einbauöffnungen eingebaut werden können, vgl. Fig. 3, gleichwohl aber verschiedene Abstrahlcharakteristiken haben können, beispielsweise die in Fig. 4 und Fig. 5 dargestellten breiten und engen Strahlungswinkel realisieren können.

## Patentansprüche

1. Strahler mit zumindest einer Lichtquelle (2) sowie einer nicht-abbildenden Linse (3) zum vollständigen Formen eines Strahlenbündels (4) zum Ausleuchten eines Zielgebiets (5), wobei die Linse (3) auf gegenüberliegenden Stirnseiten eine vorzugsweise napfförmige Lichteintrittsfläche (7) und eine Lichtaustrittsfläche (8), sowie umfangsseitig verteilt mehrere Schalensegmente (10) aufweist, die als totalreflektierende Freiformsegmente ausgebildet sind, **dadurch gekennzeichnet, dass** jedes der Schalensegmente (10) dazu ausgebildet ist, im Zielgebiet (5) einen Flächenanteil von mindestens 2/n zu bestrahlen, wenn n die Anzahl der Schalensegmente (10) der Linsen (3) ist.

2. Strahler nach dem vorhergehenden Anspruch, wobei die Schalensegmente (10) derart konturiert sind, dass ein von den Schalensegmenten (10) gemeinsam erzeugtes Indirektstrahlenbündel (4i) im Zielgebiet (5) eine asymmetrische Lichtverteilung besitzt, insbesondere in einem ebenen, schräg und/oder schleifend angestrahlten Zielgebiet (5) eine zumindest näherungsweise gleichmäßige Beleuchtungsstärke besitzt.

3. Strahler nach einem der vorhergehenden Ansprüche, wobei die Schalensegmente (10) dazu ausgebildet sind, gemeinsam ein Indirektstrahlenbündel (4i) zu erzeugen, das im Zielgebiet (5) an dessen Rändern andere, insbesondere höhere, Beleuchtungsstärken aufweist als in einem Mittelabschnitt des Zielgebiets (5), wobei vorzugsweise die Beleuchtungsstärkeverteilung zumindest entlang gegenüberliegenden Randabschnitten des Zielgebiets (5) zumindest näherungsweise gleichmäßig ausgebildet ist.

4. Strahler nach einem der vorhergehenden Ansprüche, wobei die stirnseitigen Lichteintritts- und -austrittsflächen (7, 8) dazu ausgebildet sind, im Zusammenspiel miteinander ein Direktlichtstrahlenbündel (4d) zu erzeugen, das im Vergleich zu dem an der Lichteintrittsfläche (7) von der Lichtquelle (2) empfangenen Strahlenbündel hinsichtlich des Aufweitwinkels und/oder der Lichtverteilung manipuliert ist und von dem an der Lichteintrittsfläche (7) empfangenen Strahlenbündel abweicht.

5. Strahler nach dem vorhergehenden Anspruch, wobei die Lichteintritts- und - austrittsflächen (7, 8) dazu ausgebildet sind, ein Direktlichtstrahlenbündel (4d) mit im Zielgebiet (5) asymmetrischer Lichtverteilung zu erzeugen.

6. Strahler nach einem der beiden vorhergehenden Ansprüche, wobei die Lichteintritts- und -austrittsflächen (7, 8) dazu ausgebildet sind, in einem schräg und/oder schleifend bestrahlten, ebenen Zielgebiet (5) eine zumindest näherungsweise gleichmäßige Beleuchtungsstärke zu erzeugen.

7. Strahler nach einem der vorhergehenden Ansprüche, wobei das aus der Lichtaustrittsfläche (8) austretende Direktstrahlenbündel (4d) und das von den Schalensegmenten (10) geformte Indirektstrahlenbündel (4i) im Zielgebiet (5) einander überlappen, insbesondere zueinander kongruente Zielgebiete (5) aufweisen, wobei das Direktstrahlenbündel (4d) im Zielgebiet (5) eine vom Indirektstrahlenbündel (4i) abweichende Beleuchtungsstärkeverteilung aufweist.

8. Strahler nach dem vorhergehenden Anspruch, wobei die Lichtein- und -austrittsflächen (7, 8) und die Schalensegmente (10) der Linse (3) dazu ausgebildet sind, dass das Indirektstrahlenbündel (4i) in Bereichen des Zielgebiets (5), in denen das Direktstrahlenbündel (4d) Defizite in der Beleuchtungsstärkeverteilung aufweist, vergleichsweise höhere Beleuchtungsstärken und in Bereichen des Zielgebiets (5), in denen das Direktstrahlenbündel (4d) seine volle Beleuchtungsstärke besitzt, vergleichsweise niedrigere Beleuchtungsstärken aufweist, und/oder das Direktstrahlenbündel (4d) in Bereichen des Zielgebiets (5), in denen das Indirektstrahlenbündel (4e) Defizite in der Beleuchtungsstärkeverteilung aufweist, vergleichsweise höhere Lichtstärken und in Bereichen, in denen das Indirektstrahlenbündel (4i) seine volle Beleuchtungsstärke besitzt, vergleichsweise niedrigere Beleuchtungsstärken aufweist.

9. Strahler nach einem der vorhergehenden Ansprüche, wobei das Indirektstrahlenbündel (4i) das Direktstrahlenbündel (4d) an den Rändern des Zielgebiets (5) beleuchtungsstärkemäßig überhöht.

10. Strahler nach einem der vorhergehenden Ansprüche, wobei die Lichteintritts- und -austrittsflächen (7, 8) und/oder die Schalensegmente (10) dazu ausgebildet sind, im Zielgebiet (5) ein im Querschnitt rundes oder ovales oder rechteckiges oder mehreckiges Strahlenbündel (4) zu erzeugen.

11. Strahler nach dem vorhergehenden Anspruch, wobei im Zielgebiet sowohl das Direktstrahlenbündel (4d) als auch das Indirektstrahlenbündel (4i) die genannte runde oder ovale oder rechteckige oder mehreckige Querschnittsform besitzen, wobei vorzugsweise das Direktstrahlenbündel (4d) und das Indirektstrahlenbündel (4i) dieselbe Querschnittsform besitzen.

12. Strahler nach einem der vorhergehenden Ansprüche, wobei eine umfangsseitige Anschlusskontur der Linse (3) von der Querschnittskontur des Strahlenbündels (4) im Zielgebiet abweicht.

13. Strahler nach einem der vorhergehenden Ansprüche, wobei nur die eine Linse (3) vorgesehen ist und/oder der Strahler über die Linse hinaus keine weiteren, strahlenbündelformenden Optikelemente umfasst und/oder zumindest eines/jedes der Schalensegmente (10) nicht-abbildend ausgebildet ist.

14. Leuchtensatz umfassend mehrere Strahler (1), von denen zumindest einer gemäß einem der vorhergehenden Ansprüche 1 bis 13 ausgebildet ist und jeder folgendes umfasst: zumindest eine Lichtquelle (2) sowie eine Linse (3), die einen zentralen Linsenkorpus (6) und umfangsseitig verteilt mehrere Linsenschalensegmente (10) aufweist, wobei die Linsen (3) aller Strahler (1) einander entsprechende Umfangskonturen und/oder Anschlussmaße besitzen, so dass die Strahler (1) gegeneinander austauschbar in dieselbe Einbauumgebung montierbar sind, **dadurch gekennzeichnet, dass** die Linse (3) eines ersten Strahlers dazu ausgebildet ist, einen Querschnitt rundes Strahlenbündel (4) abzugeben und die Linse (3) eines zweiten Strahlers dazu ausgebildet ist, einen Querschnitt mehreckiges Strahlenbündel (4) abzustrahlen.

15. Leuchtensatz nach dem vorhergehenden Anspruch, wobei die Schalensegmente (10) jeder Linse (3) eines jeden Strahlers (1) jeweils dazu ausgebildet sind, im Zielgebiet (5) einen Flächenanteil von zumindest 2/n zu bestrahlen, wenn n die Anzahl der Schalensegmente (10) der jeweiligen Linse (3) ist.
